# EUROPÄISCHE PATENTANMELDUNG

(11) **EP 1 022 304 A2**
(43) Veröffentlichungstag der Anmeldung: **26.07.2000**
(21) Anmeldenummer: 00100231.0
(22) Anmeldetag: 17.01.2000
(51) Int. Cl.: C08K 3/24, C08K 3/26

(54) **Polyurethansystem als Kautschukersatz**

(30) Priorität: 19.01.1999 DE 19901937
(71) Anmelder: BASF AKTIENGESELLSCHAFT, 67056 Ludwigshafen (DE)
(72) Erfinder: Llagostera, Jardi, Badalona, Barcelona (ES); Stadler, Edmund, Dr., 96142 Hollfeld (DE)
(74) Vertreter: Isenbruck, Günter, Dr.

(57) **Zusammenfassung**

Die Erfindung betrifft ein Verfahren zur Herstellung eines Polyurethansystems mit einer Dichte im Bereich von 0,2 bis 2 g/cm³ und mindestens einer der folgenden Eigenschaften:
- Härte im Bereich von 50 bis 100 Shore A,
- Zugfestigkeit im Bereich von 5 bis 15 N/mm²,
- Dehnung im Bereich von 150 bis 1.000 %,
- Weiterreißfestigkeit im Bereich von 15 bis 50 N/mm,
- Abrieb von 300 bis 700 mg,
wobei mindestens eine gegenüber Isocyanaten reaktive Verbindung aufweisende Komponente A und eine mindestens ein Polyisocyanat aufweisende Komponente B zu einem Polyurethan in Kontakt gebracht werden, wobei während des in Kontakt bringens und/oder vor dem in Kontakt bringen ein Schwefel oder Kohlenstoff aufweisendes Sauerstoffsalz eines Metalls der zweiten Hauptgruppe in einer Menge im Bereich von 10 bis 90 Gew.-%, bezogen auf das Polyurethansystem, zugesetzt wird, sowie ein Verfahren zur Einstellung von Materialeigenschaften, einen dieses Polyurethansystem beinhaltenden Formkörper und die Verwendung dieses Polyurethansystems als Kautschukersatz.

## Beschreibung

Die Erfindung betrifft ein Verfahren zur Herstellung eines Polyurethansystems, dieses Polyurethansystem, sowie ein Verfahren zur Einstellung von Materialeigenschaften in diesem Polyurethansystem. Ferner betrifft diese Erfindung einen dieses Polyurethansystem beinhaltenden Formkörper, sowie die Verwendung des Polyurethansystems als Kautschukersatz.

In nahezu allen Bereichen der Verkehrstechnik ist es notwendig Materialien zu verwenden, mit denen eine Gewichtsreduktion der Verkehrsmittel erreicht werden kann. So ist seit langem bekannt, daß der Treibstoffverbrauch von Verkehrsmittein mit zunehmendem Gewicht steigt. Daher ist es erwünscht, Materialien für den Bau von Verkehrsmitteln einzusetzen, die zu einer Gewichtsreduzierung führen. Bei derartigen Materialien ist eine besonders geringe Dichte bei ansonsten vergleichbar guten oder gar besseren Materialeigenschaften bevorzugt. Weiterhin ist bei der Auswahl derartiger Materialien zu beachten, daß sie leicht zugänglich und gut verarbeitbar sind, damit der Einsatz dieser Materialien neben der Treibstoffverbrauchsreduktion auch unter anderen Gesichtspunkten wirtschaftlich ist.

Eines dieser Materialien, die bisher im Verkehrsmittelbau, vorzugsweise im Automobilbau, eingesetzt wurden, sind Kautschuke. Kautschuke wurden aufgrund ihrer guten Materialeigenschaften bei geringer Dichte für flächige Gebilde, insbesondere für Bodenbeläge und besonders bevorzugt für Bodenmatten im Automobilbau eingesetzt.

Die Dichte derartiger Kautschukmaterialien liegt in der Regel im Bereich von 1,3 bis 1,5 g/cm³. Die Zugfestigkeit liegt im Bereich von 7 bis 8 N/mm², die Härte im Bereich von 70 bis 80 Shore A, die Dehnung im Bereich von 600 bis 650 %, die Weiterreißfestigkeit im Bereich von 15 bis 25 N/mm und der Abrieb im Bereich von 450 bis 550 mg.

Der Einsatz von Kautschukmaterialien und insbesondere von Kautschukmaterialien mit den vorgenannten erwünschten Eigenschaften bringt jedoch eine Reihe von Problemen mit sich.

Zum einen ist das Herstellungsverfahren recht aufwendig. Bei der Herstellung der vorgenannten flächigen Gebilde, insbesondere Bodenbeläge bzw. Bodenmatten, ist es notwendig in einem ersten Schritt den Kautschukrohling durch Kalandrieren herzustellen. In einem zweiten Schritt wird nach dem Kalandrieren in einer beheizten Form der eigentliche Formkörper, hier vorzugsweise das flächige Gebilde, gefertigt. Die Form wird hierbei in einer Presse eingeschlossen geheizt, so daß die Mischung durch plastisches Fließen die vorgegebene Form ausfüllen kann. Der soeben beschriebene zweite Schritt ist vergleichsweise zeitaufwendig, da die Fließeigenschaften des Kautschuks, bedingt durch seine polymere und meist zusätzlich vernetzte Struktur, schlecht sind.

Weiterhin handelt es sich bei Kautschuken um ein recht weiches Material, so daß die Kratzfestigkeit der Oberflächen der herausgebildeten Formkörper unbefriedigend ist. Oftmals reicht es aus, mit dem Fingernagel über die Oberfläche des Formkörpers zu fahren, um eine Kratzspur zu hinterlassen. Dies ist insbesondere nachteilig bei Bodenbelägen und Fußmatten, die beispielsweise in Baufahrzeugen oder Lastkraftwagen eingesetzt werden, in denen Fahrgäste mit schwerem Arbeitsschuhwerk oder Gegenstände mit schaffen Kanten befördert werden.

Zudem ist die Lichtstabilität von Kautschuk, insbesondere im Einsatz bei Bodenbelägen, unzureichend. Die mangelhafte Lichtstabilität ist insbesondere auf im Kautschuk vorhandene Doppelbindungen zurückzuführen, die durch einen lang andauernden Lichteinfall zur Reaktion gebracht werden und damit zur Veränderung der Materialeigenschaften sowie der Oberfläche des Kautschuks und der daraus gebildeten Formkörper führen.

*WO 97/22748 betrifft einen recyclingfähigen Bodenbelag auf Polyurethanbasis, der Füllstoffe enthalten kann, worunter u. a. Calciumcarbonat und Bariumsulfat fällt.*

*DE 33 36 511 A1 offenbart gleichfalls ein Polyurethan, das gegebenenfalls Füllstoffe, u. a. Kreide enthalten kann.*

*Beide Dokumente sind nicht geeignet, die vorgenannten Nachteile zu überwinden.*

Aus dem Vorgenannten ergeben sich nunmehr die folgenden Aufgaben:

Zum einen ist ein Material zur Verfügung zu stellen, das bei gleichfalls geringer Dichte zumindest vergleichbare oder gar bessere Materialeigenschaften als Kautschuk aufweist.

Weiterhin muß dieses Material einfacher als Kautschuk, bevorzugt in einem Ein-Schritt-Verfahren, zu Formkörpern, vorzugsweise flächigen Gebilden wie Bodenbelägen und Bodenmatten verarbeitbar sein.

Ferner besteht eine erfindungsgemäße Aufgabe darin, die Kratzfestigkeit und/oder Lichtstabilität neben den anderen vorgenannten Materialeigenschaften verglichen mit Kautschuk zumindest gleichzuhalten oder gar zu verbessern.

Die vorstehenden Aufgaben werden durch ein Verfahren zur Herstellung eines Polyurethansystems und einem Polyurethan erhältlich aus diesen Verfahren mit einer Dichte im Bereich von 0,2 bis 2 g/cm³ und mindestens einer der folgenden Eigenschaften:
- Härte im Bereich von 50 bis 100 Shore A,
- Zugfestigkeit im Bereich von 5 bis 15 N/mm²,
- Dehnung im Bereich von 150 bis 1.000 %,
- Weiterreißfestigkeit im Bereich von 15 bis 50 N/mm,
- Abrieb von 300 bis 700 mg,
gelöst, wobei in diesem Verfahren mindestens eine eine gegenüber Isocyanaten reaktive Verbindung aufweisende Komponente A und eine mindestens ein Polyisocyanat aufweisende Komponente B zu einem Polyurethan in Kontakt gebracht werden, wobei während des Inkontaktbringens und/oder vor dem in Kontakt bringen ein Schwefel oder Kohlenstoff aufweisendes Sauerstoffsalz eines Metalls der zweiten Hauptgruppe in einer Menge im Bereich von 10 bis 90 Gew.-%, bezogen auf das Polyurethansystem, zugesetzt wird.

Erfindungsgemäß ist es bevorzugt, das Schwefel- oder Kohlenstoff aufweisende Sauerstoffsalz vor dem in Kontakt bringen der Komponente B oder der Komponenten A oder beiden, insbesondere der Komponente A, zuzusetzen. Wenn das Schwefel- oder Kohlenstoff aufweisende Sauerstoffsalz der Komponente A vor dem in Kontakt bringen zugesetzt wird, ergibt sich eine Mischung mit hoher Lagerstabilität und guten Transporteigenschaften.

Bei Polyurethansystemen, deren Dichte im Bereich von unterhalb der sich für das Polyurethansystem aus den Komponenten rein rechnerisch ergebenden Dichte und 0,2 g/cm³ liegt, handelt es sich um Schäume. Derartige Polyurethansystemschäume besitzen vorzugsweise eine Dichte im Bereich von 0,2 bis 1, bevorzugt 0,3 bis 0,9 und besonders bevorzugt 0,4 bis 0,8 g/cm³.

Neben der Dichte im vorgenannten Bereich, läßt sich mindestens eine der weiteren vorgenannten Eigenschaften in einem Polyurethansystem dadurch einstellen, das in ein Polyurethan ein Schwefel oder Kohlenstoff aufweisendes Sauerstoffsalz eines Metalls der zweiten Hauptgruppe in einer Menge im Bereich von 10 bis 90, *bevorzugt 20 bis 70, besonders bevorzugt 30 bis 55 und darüber hinaus bevorzugt 30 bis 40 sowie 45 bis 55* Gew.-%, bezogen auf das Polyurethansystem, eingearbeitet wird.

Als Elemente der zweiten Hauptgruppe haben sich insbesondere Mg, Ca, Sr, oder Ba oder mindestens zwei davon besonders bewährt. Unter den vorstehenden Metallen sind Ca und Ba besonders bevorzugt.

Als Anionen des Schwefel oder Kohlenstoff aufweisenden Sauerstoffsalzes eines Metalls der zweiten Hauptgruppe haben sich insbesondere SO₄²⁻ oder CO₃²⁻ oder beide besonders bewährt. Als Kombination der zuvor erwähnten Metalle und Anionen haben sich insbesondere Bariumsulfat (BaSO₄) und Calciumcarbonat (CaCO₃) bewährt, wobei Calciumcarbonat besonders bevorzugt ist.

Das Sauerstoffsalz oder die Sauerstoffsalzgemische können in jeder denkbaren Form erfindungsgemäß eingesetzt werden, Es hat sich jedoch als vorteilhaft herausgestellt, die Sauerstoffsalze als Teilchen einzusetzen. Sofern die Sauerstoffsalze als Teilchen eingesetzt werden, hat es sich wiederum bewährt, daß der überwiegende Anteil dieser Teilchen eine Größe im Bereich von 0,01 bis 1000, bevorzugt von 0,1 bis 500 und besonders bevorzugt von 1 bis 100 µm aufweist. Die eingesetzten Teilchen sind vorzugsweise im wesentlichen kugelförmig. Als Sauerstoffsalz hat sich insbesondere Kreide bewährt, wobei die Kreide des Typs BLP3 der Firma OMYA GmbH besonders bevorzugt ist.

Im erfindungsgemäßen Verfahren können zur Bewegung der mit dem Sauerstoffsalz versetzten Komponenten alle dem Fachmann bekannten Transportvorrichtungen, insbesondere Pumpen, Schnecken und Dosiermaschinen, vorzugsweise Kolbendosiermaschinen eingesetzt werden.

Ferner ist erfindungsgemäß ein Formkörper bevorzugt, der neben dem zuvor definierten Dichtebereich mindestens eine der zuvor definierten Eigenschaften aufweist und erhältlich ist durch ein Verfahren, wobei die zuvor definierte Komponente A und die zuvor definierte Komponente B mit dem zuvor definierten Sauerstoffsalz in einer der Formkörper entsprechenden Form miteinander in Kontakt gebracht werden.

In einer erfindungsgemäßen Ausführungsform ist ein Dichtebereich von 1,1 bis 1,7 g/cm³ bei einem Sauerstoffsalzgehalt im Bereich von 20 bis 70 Gew.-% bevorzugt und eine Dichte im Bereich von 1,2 bis 1,6 g/cm³ bei einem Sauerstoffsalzgehalt im Bereich von 30 bis 60 Gew.-% besonders bevorzugt, sowie eine Dichte im Bereich von 1,3 bis 1,5 g/cm³ bei einem Sauerstoffsalzgehalt von 30 bis 40 Gew.-% darüber hinaus bevorzugt.

In einer anderen erfindungsgemäßen Ausführungsform liegt die Shorehärte A in einem Bereich von 60 bis 99, bevorzugt 70 bis 98 und besonders bevorzugt 90 bis 97.

In einer anderen erfindungsgemäßen Ausführungsform liegt die Zugfestigkeit im Bereich von 6 bis 14, bevorzugt 7 bis 13 und besonders bevorzugt 10 bis 12 N/mm².

In einer weiterhin bevorzugten Ausführungsform liegt die Dehnung im Bereich von 160 bis 300, bevorzugt 170 bis 250 und besonders bevorzugt 180 bis 220 %.

In einer anderen Ausführungsform der vorliegenden Erfindung liegt die Weiterreißfestigkeit im Bereich von 20 bis 40, bevorzugt 25 bis 35 und besonders bevorzugt 27 bis 32 N/mm.

Zudem ist eine Ausführungsform erfindungsgemäß bevorzugt, in der der Abrieb im Bereich von 350 bis 650, bevorzugt 400 bis 550 und besonders bevorzugt 450 bis 500 mg liegt.

Erfindungsgemäß wird die Shorehärte nach DIN 53505, die Dichte nach DIN 53479, die Zugfestigkeit nach DIN 53504, die Dehnung nach DIN 53504, die Weiterreißfestigkeit nach DIN 53515, sowie der Abrieb nach DIN 53420 bestimmt.

Eine weiterhin bevorzugte erfindungsgemäße Ausführungsform weist neben den vorgenannten Dichtebereichen die vorgenannten Härtebereiche oder die vorgenannten Zugfestigkeitsbereiche oder die vorgenannten Dehnungsbereiche oder die vorgenannten Weiterreißfestigkeitsbereiche oder die vorgenannten Abriebsbereiche auf.

Eine weiterhin erfindungsgemäß bevorzugte Ausführungsform weist neben den zuvorstehenden Dichtebereichen die vorstehenden Härte- und Zugfestigkeits- oder Dehnungs- oder Weiterreißfestigkeits- oder Abriebsbereiche auf.

Eine andere erfindungsgemäße Ausführungsform weist neben dem vorstehenden Dichte-, Härte- und Zugfestigkeitsbereich den vorstehenden Dehnungs- oder Weiterreißfestigkeits- oder Abriebsbereich auf.

Eine andere erfindungsgemäße Ausführungsform weist neben dem vorstehenden Dichte-, Härte-, Zugfestigkeits- und Dehnungsbereich den vorstehend definierten Weiterreißfestigkeits- oder Abriebsbereich auf.

Eine weitere erfindungsgemäße Ausführungsform weist neben dem vorstehenden Dichtebereich den vorstehenden Härte-, Zugfestigkeits-, Dehnungs-, Weiterreißfestigkeits-, und Abriebsbereich auf.

Erfindungsgemäß sind als Formkörper flächige Gebilde bevorzugt. Unter diesen flächigen Gebilden sind wiederum Bodenbeläge oder Bodenmatten bevorzugt. Im allgemeinen weisen die flächigen Gebilde eine Flächenausdehnung von 1 bis 10, bevorzugt 2 bis 8 und besonders bevorzugt 3 bis 7 m² als Fläche auf. Die Dicke der flächigen Gebilde beträgt 0,01 bis 10, bevorzugt 0,1 bis 5 und besonders bevorzugt 0,2 bis 2 cm.

Bei dem zuvor beschriebenen Ein-Schritt-Verfahren, nach dem der erfindungsgemäße Formkörper erhältlich ist, ist es besonders bevorzugt, daß der Zeitraum zwischen dem in Kontakt bringen der Komponente A und B und des Sauerstoffsalzes in einer dem Formkörper entsprechenden Form und dem Zeitpunkt, an dem der Formkörper aus der Form entnommen werden kann möglichst gering ist. Für die flächigen Gebilde mit den zuvor beschriebenen Größen liegt dieser Zeitraum unter 20 Minuten, bevorzugt im Bereich von 1 Sekunde bis 5 Minuten, besonders bevorzugt im Bereich von 1 bis 2 Minuten.

In einer erfindungsgemäß bevorzugten Ausführungsform können als Komponente A zwei oder mehrere Polyole eingesetzt werden. Hierbei ist es bevorzugt, daß Polyetherole eingesetzt werden. Unter diesen Polyetherolen ist der Einsatz von Polyetherdiolen und Polyethertriolen besonders bevorzugt. Als Polyetherdiol werden insbesondere solche eingesetzt, die eine OH-Zahl im Bereich von 10 bis 70, bevorzugt 20 bis 50 und besonders bevorzugt 25 bis 35 mgKOH/g aufweisen. Weiterhin ist es bei den Polyetherdiolen bevorzugt, daß diese aus Propylenoxid und Ethylenoxid in einer Ausführungsform des aus Propylenoxyd und Ethylenoxyd bestehenden Polyetherdiols beträgt der maximale Gewichtsanteil an Ethylenoxyd 50, bevorzugt 40 und besonders bevorzugt 25 %, wobei der restliche Anteil bis 100 % durch Propylenoxyd und gegebenenfalls anwesende Hilfs- und Zusatzstoffe gebildet wird, eingesetzt werden.

Ferner haben sich erfindungsgemäß Polyesterdiole und Polyestertriole bewährt. Diese weisen vorzugsweise die gleichen Eigenschaften, wie zuvor für die Polyetherdiole und Polyethertriole aufgeführt, auf.

Als Polyethertriole haben sich erfindungsgemäß solche bewährt, deren OH-Zahl im Bereich von 10 bis 60, bevorzugt 20 bis 50 und besonders bevorzugt 25 bis 35 mgKOH/g liegt. Zudem hat es sich auch bei den Polyethertriolen bewährt, daß diese aus Ethlyenoxid und Propylenoxid bestehen. Vorzugsweise beträgt der Ethylenoxidanteil maximal 75 Gew.-%, bevorzugt maximal 50 % und besonders bevorzugt maximal 25 Gew.-%, bezogen auf das Polyethertriol, wobei die fehlenden Anteile aus entsprechenden Mengen Propylenoxid bestehen. Zudem ist in dem Polyethertriol vorzugsweise mindestens 1 Gew.-% Ethylenoxid eingebaut.

Weiterhin kann neben den Komponenten A und Komponenten B und dem Sauerstoffsalz auch noch mindestens ein tertiäres Amin zugegen sein. Als tertiäres Amin hat sich insbesondere 1,4-Diazabicyclo-(2,2,2)-octan (DABCO) bewährt.

Ferner ist es vorteilhaft, Übergangsmetall-, vorzugsweise Zinnverbindungen und darunter bevorzugt Zinn-IV-Verbindungen als Katalysator erfindungsgemäß zu verwenden.

Die Komponente B beinhaltet erfindungsgemäß vorzugsweise Mischungen, bestehend aus urethanmodifizierten Polyisocyanaten. Hierbei ist es bevorzugt, daß diese Mischungen einen Gesamt-NCO-gehalt im Bereich von 5 bis 50, bevorzugt 10 bis 30 und besonders bevorzugt 15 bis 35 Gew.-% aufweisen. Falls Diphenylmethandiisocyomat (MDI) eingesetzt wird, liegt der Gesamt-NCO-gehalt in einem Bereich von 4 bis 33,6, bevorzugt von 13 bis 29 Gew.-%.

Bei dem erfindungsgemäßen Verfahren zur Herstellung des Formkörpers hat es sich bewährt, daß die Temperatur der Form im Bereich von 30 bis 90, bevorzugt 40 bis 80 und besonders bevorzugt 60 bis 70 °C liegt. Weiterhin ist es für die Herstellung des Formkörpers vorteilhaft, wenn die Temperatur der eingetragenen Komponenten A und B, sowie des Sauerstoffsalzes und gegebenenfalls weiterer Hilfsmittel, Ausgangs- und Zusatzstoffe im Bereich von 20 bis 70, bevorzugt 30 bis 60 und besonders bevorzugt 40 bis 50 °C liegt.

Erfindungsgemäß sind weiterhin Gebilde, insbesondere Schäume, Folien, Fasern, Formkörper und Beschichtungen bevorzugt, die das erfindungsgemäße Polyurethan oder das erfindungsgemäße Polyurethansystem oder ein Polyurethansystem erhältlich nach einem der zuvor beschriebenen Verfahren oder mindestens zwei davon beinhalten.

Darüber hinaus hat sich die Verwendung von mindestens einem Polyurethan oder einem Polyurethansystem oder einem Polyurethansystem erhältlich durch eines der zuvor beschriebenen Verfahren oder mindestens zwei davon zum zumindest teilweisen, vorzugsweise vollständigen, Ersatz von Kautschuk oder Kautschuk beinhaltenden Materialien in Gebilden bewährt.

Besonders bevorzugte Gebilde bzw. Formkörper, sind Bodenmatten, wie sie in Kraftfahrzeugen zur Personenbeförderung im Fahrgastbodenbereich oder in Lastkraftwagen im Bodenbereich des Laderaumes eingesetzt werden.

Die weiterhin erfindungsgemäß einsetzbaren Ausgangs-, Hilfs- oder Zusatzstoffe sind im folgenden beispielhaft beschrieben:

Die hier angegebenen Gew.-% beziehen sich, sofern nichts anderes angegeben, jeweils für sich auf das Polyurethan, das Polyurethansystem oder den Formkörper mit denen sie angegeben sind.

Als Isocyanate kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat, 4,4'-, 2,4'- und/oder 2,2'-Diphenylmethandiisocyanat, Polyphenylpolymethylen-polyisocyanate und/oder MDI und/oder Toluylendiisocyomate (TDI) Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Als gegenüber Isocyanaten reaktive Verbindungen können zweckmäßigerweise solche mit einer Funktionalität von 2 bis 8, vorzugsweise 2 bis 6, und einem Molekulargewicht von 60 bis 10000 verwendet werden, die als gegenüber Isocyanaten reaktive Gruppen Hydroxyl-, Thiol- und/oder primäre und/oder sekundäre Aminogruppen aufweisen. Bewährt haben sich z. B. Polyole ausgewählt aus der Gruppe der Polyetherole, beispielsweise Polytetrahydrofuran, Polyesterole, Polythioether-polyole, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterole und/oder Polyetherole. Der Hydroxylzahl der Polyhydroxylverbindungen beträgt dabei in aller Regel 28 bis 850 mg KOH/g und vorzugsweise 35 bis 600 mg KOH/g.

Als Polyolkomponenten werden dabei für Polyurethane bzw. -schäume, die gegebenenfalls Isocyanuratstukturen aufweisen können, hochfunktionelle Polyole, insbesondere Polyetherole auf Basis hochfunktioneller Alkohole, Zuckeralkohole und/oder Saccharide als Startermoleküle, für flexible Schäume 2- und/oder 3-funktionelle Polyether- und/oder Polyesterole auf Basis Glyzerin und/oder Trimethylolpropan und/oder Glykolen als Startermoleküle bzw. zu veresternde Alkohole eingesetzt. Die Herstellung der Polyetherole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Die Polyetherole besitzen eine Funktionalität von vorzugsweise 2 bis 6 und insbesondere 2 bis 4 und Molekulargewichte von 400 bis 1000, vorzugsweise 400 bis 6000.

Geeignete Polyesterole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterole besitzen vorzugsweise eine Funktionalität von 2 bis 4, insbesondere 2 bis 3, und ein Molekulargewicht von 480 bis 3000, vorzugsweise 600 bis 2500 und insbesondere 600 bis 2200.

Als gegenüber Isocyanaten reaktive Verbindungen können gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z. B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/ oder araliphatische Diole mit 2 bis 14, vorzugsweise 4 bis 10 Kohlenstoffatomen, wie z. B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen-und/oder 1,2-Propylenoxid und den vorgenannten Diolen und/oder Triolen als Startermoleküle. Allgemein und insbesondere bei Prepolymeren aus TDI haben sich als Kettenverlängerer primäre oder sekundäre aliphatische oder aromatische Amine mit 5 bis 30, bevorzugt 6 bis 20 und besonders bevorzugt 6 bis 8 Kohlenstoffatomen, insbesondere Diethyltoluylendiamin besonders bewährt.

Sofern zur Herstellung der Polyurethane Kettenverlängerungsmittel, Vernetzungsmittel oder Mischungen davon Anwendung finden, kommen diese zweckmäßigerweise in einer Menge von 0 bis 30 Gew.-%, vorzugsweise von 2 bis 15 Gew.-%, bezogen auf das Gewicht der insgesamt eingesetzten gegenüber Isocyanaten reaktiven Verbindungen, zum Einsatz.

Als Katalysatoren können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N-Tris-(dialkylaminoalkyl)hexahydrotriazine, z. B. N, N', N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Der Reaktionsmischung zur Herstellung der Polyurethane können gegebenenfalls noch weitere Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen. Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen, angewandt. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Bewacht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew. -%, bezogen auf das Gewicht der Isocyanate und dem Gewicht der insgesamt eingesetzten gegenüber Isocyanaten reaktiven Verbindungen, einverleibt, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Zur Herstellung der erfindungsgemäßen Polyurethane bzw. Polyurethansysteme werden die Isocyanate und die gegenüber Isocyanaten reaktiven Verbindungen in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt.

Die Polyurethane bzw. Polyurethansysteme werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Das erfindungsgemäße System kann durch kontinuierliches Auftragen auf geeignete Bandstraßen zur Erzeugung von Blockschäumen oder in Formwerkzeugen zur Erzeugung von geschäumten Formkörpern eingesetzt werden.

Als besonders vorteilhaft hat es sich erwiesen, nach dem Zweikomponentenverfahren zu arbeiten und die gegenüber Isocyanaten reaktiven Verbindungen, gegebenenfalls das oder die Treibmittel, die Katalysatoren und/oder Hilfs- und/oder Zusatzstoffe in der Komponente A zu vereinigen und als Komponente B die Isocyanate oder Mischungen aus den Isocyanaten und gegebenenfalls Treibmittel zu verwenden.

Die Erfindung wird nun anhand nicht limitierender Beispiele erläutert:

### BEISPIELE:

### PU-System:

Die gemäß nachfolgender Tabelle beschriebenen Komponenten wurden für das Polyurethansystem eingesetzt.

**Tabelle 1**

| Komponente A | |
|---|---|
| Polyol I | 55.06 Gew.-Teile |
| Polyol II | 24.00 Gew.-Teile |
| Butandiol | 12.50 Gew.-Teile |
| Katalysator I | 0.40 Gew.-Teile |
| Katalysator II | 0.04 Gew.-Teile |
| UV-Stabilisator | 1.00 Gew.-Teile |
| Zeolithpaste | 7.00 Gew.-Teile |
| | |

| Komponente B | |
|---|---|
| Polyisocyanat I | 55.00 Gew.-Teile |

| | |
|---|---|
| Polyol I: Lupranol 2043, BASF AG | |
| Polyol II: Lupranol 2045, BASF AG | |
| Katalysator I: Dabco 33 LV, Air Products | |
| Katalysator II: Fomrez UL-28, Fa. Witco Chemicals | |
| Polyisocyanat I: B 264, Fa. Elastogran GmbH | |

Die in Tabelle 1 aufgeführten Komponenten wurden in einem Hochdruck-Kolbendosier-Mischaggregat bei einer Werkzeugtemperatur von 65 °C und einer Eintragstemperatur von 45 °C zur Reaktion gebracht. Die Innenwände de Werkzeugs wurden mit einem handelsüblichen Formtrennmittel versehen. Nach 90 Sekunden wurde eine Plane mit Länge 200 cm, Breite 100 cm und Höhe 0,3 cm dem Formwerkzeug entnommen.

Die mechanischen Eigenschaften sind für die einzelnen Polyurethansysteme, die entweder mit Calciumcarbonat oder Bariumsulfat versetzt wurden in den Tabellen 2 und 3 dargestellt.

**Tabelle 2**

| Mechanische Eigenschaften gefüllter PU-Systeme und einem entsprechenden Kautschukmaterial | | | | |
|---|---|---|---|---|
| | **Dimension** | **PU-System mit 35 % CaCO**_{**3**} | **PU-System mit 50 % BaSO**_{**4**} | **Kautschukmaterial** |
| **Härte DIN 53505** | Shore A | 94 | 94 | 79 |
| **Dichte DIN 53479** | g/cm³ | 1.4 | 1.8 | 1.4 |
| **Zugfestigkeit DIN 53504** | N/mm² | 11.7 | 11.2 | 7.5 |
| **Dehnung DIN 53504** | % | 200 | 230 | 630 |
| **Weiterreißfest. DIN 53515** | N/mm | 29 | 27 | 20 |
| **Abrieb DIN 53420** | mg | 470 | 540 | 500 |

**Tabelle 3**

| Mechanische Eigenschaften von BaSO₄ gefüllten PU-Systemen | | | | |
|---|---|---|---|---|
| | **Dimension** | **PU-System mit 50 % BaSO**_{**4**} | **PU-System mit 38 % BaSO**_{**4**} | **PU-System mit 30 % BaSO**_{**4**} |
| **Härte DIN 53505** | Shore A | 94 | 95 | 94 |
| **Dichte DIN 53479** | g/cm³ | 1.8 | 1.6 | 1.5 |
| **Zugfestigkeit DIN 53504** | N/mm² | 11.2 | 14.3 | 14.9 |
| **Dehnung DIN 53504** | % | 230 | 220 | 240 |
| **Weiterreißfest. DIN 53515** | N/mm | 27 | 34 | 26 |
| **Abrieb DIN 53420** | mg | 540 | 450 | 400 |

## Patentansprüche

1. Verfahren zur Herstellung eines Polyurethansystems mit einer Dichte im Bereich von 0,2 bis 2 g/cm³ und mindestens einer der folgenden Eigenschaften:
- Härte im Bereich von 50 bis 100 Shore A,
- Zugfestigkeit im Bereich von 5 bis 15 N/mm²,
- Dehnung im Bereich von 150 bis 1.000 %,
- Weiterreißfestigkeit im Bereich von 15 bis 50 N/mm,
- Abrieb von 300 bis 700 mg,
wobei mindestens eine gegenüber Isocyanaten reaktive Verbindung aufweisende Komponente A und eine mindestens ein Polyisocyanat aufweisende Komponente B zu einem Polyurethan in Kontakt gebracht werden, wobei während des in Kontakt bringens und/oder vor dem in Kontakt bringen ein Schwefel oder Kohlenstoff aufweisendes Sauerstoffsalz eines Metalls der zweiten Hauptgruppe in einer Menge im Bereich von 10 bis 90 Gew.-%, bezogen auf das Polyurethansystem, zugesetzt wird.

2. Verfahren zur Einstellung eines Bereiches mindestens einer der in Anspruch 1 definierten Eigenschaften zusätzlich zur Dichte im Bereich von 1 bis 2 g/cm³ in einem Polyurethansystem, wobei in ein Polyurethan ein Schwefel oder Kohlenstoff aufweisendes Sauerstoffsalz eines Metalls der zweiten Hauptgruppe des Periodensystems in einer Menge in einem Bereich von 10 bis 90 Gew.-%, bezogen auf das Polyurethansystem, eingearbeitet wird.

3. Verfahren nach einem der vorhergehenden Ansprüche, wobei das Anion des Schwefels oder Sauerstoff aufweisenden Sauerstoffsalzes eines Metalls der zweiten Hauptgruppe SO₄²⁻ oder CO₃²⁻ oder beides ist.

4. Verfahren nach einem der vorhergehenden Ansprüche, wobei das Metall der zweiten Hauptgruppe ausgewählt ist aus der Gruppe, bestehend aus Mg, Ca, Sr, oder Ba, oder mindestens zwei aus dieser Gruppe.

5. Verfahren nach einem der vorhergehenden Ansprüche, wobei das Sauerstoffsalz eine Teilchengröße im Bereich von 0,01 bis 1000 µm besitzt.

6. Polyurethansystem mit einer Dichte im im Anspruch 1 definierten Bereich und zusätzlich mindestens einer der in Anspruch 1 definierten Eigenschaften, erhältlich durch Inkontaktbringen mindestens einer in Anspruch 1 definierten Komponente A mit mindestens einer in Anspruch 1 definierten Komponente B, wobei während des Inkontaktbringens und/oder vor dem in Kontakt bringen mindestens ein in Anspruch 1 definiertes Sauerstoffsalz zugesetzt wird.

7. Formkörper mit einer Dichte im Bereich von 1 bis 2 g/cm³ und mindestens einer der in Anspruch 1 definierten Eigenschaften, erhältlich durch ein Verfahren, wobei mindestens eine in Anspruch 1 definierte Komponente A und mindestens eine in Anspruch 1 definierte Komponente B mit dem in Anspruch 1 definierten Sauerstoffsalz in einer dem Formkörper entsprechenden Form miteinander in Kontakt gebracht werden.

8. Gebilde, insbesondere Schaum, Folie, Formkörper, Faser und Beschichtung, beinhaltend ein in Anspruch 1 definiertes Polyurethan oder ein Polyurethansystem nach Anspruch 6 oder ein Polyurethansystem, erhältlich nach einem Verfahren gemäß einem der Ansprüche 1 bis 5 oder mindestens zwei davon.

9. Verwendung von mindestens einem in Anspruch 1 definierten Polyurethan oder einem Polyurethansystem nach Anspruch 6 oder einem Polyurethansystem, erhältlich nach einem Verfahren gemäß einem der Ansprüche 1 bis 5 oder mindestens zwei davon zum zumindest teilweisen Ersatz von Kautschuk oder Kautschuk beinhaltenden Materialien in Gebilden.
